(19) Europäisches Patentamt
European Patent Office
Office européen des brevets

(11) Numéro de publication: **0 108 679**
**B1**

(12) # FASCICULE DE BREVET EUROPEEN

(45) Date de publication du fascicule du brevet: **19.02.86**

(21) Numéro de dépôt: **83402085.1**

(22) Date de dépôt: **26.10.83**

(51) Int. Cl.⁴: **C 07 C 153/11**, C 07 D 213/64, A 01 N 53/00, A 23 K 1/16 // C07C121/75

(54) **Nouveaux dérivés de l'acide cyclopropane carboxylique comportant un groupement alcoylthiocarbonyle et un atome d'halogène, leur préparation, leur application à la lutte contre les parasites des végétaux, des animaux et des locaux et les compositions les renfermant.**

(30) Priorité: **02.11.82 FR 8218328**

(43) Date de publication de la demande: **16.05.84 Bulletin 84/20**

(45) Mention de la délivrance du brevet: **19.02.86 Bulletin 86/8**

(84) Etats contractants désignés: **BE CH DE FR GB IT LI LU NL**

(56) Documents cités:
**EP - A - 0 050 534**
**EP - A - 0 077 721**

**Le dossier contient des informations techniques présentées postérieurement au dépôt de la demande et ne figurant pas dans le présent fascicule.**

(73) Titulaire: **ROUSSEL-UCLAF, 35, boulevard des Invalides, F-75007 Paris (FR)**

(72) Inventeur: **Tessier, Jean, 30, rue Jean Moulin, F-94300-Vincennes (FR)**
Inventeur: **Teche, André, 15, rue Godot de Mauroy, F-75009 Paris (FR)**
Inventeur: **Demoute, Jean-Pierre, 249bis, rue de Rosny, F-93100 Montreuil-Sous-Bois (FR)**

(74) Mandataire: **Tonnellier, Marie-José, ROUSSEL-UCLAF 111, route de Noisy Boîte Postale no.9, F-93230 Romainville (FR)**

EP 0 108 679 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne de nouveaux dérivés de l'acide cyclopropane carboxylique comportant un groupement alcoylthiocarbonyle et un atome d'halogène, leur préparation, leur application à la lutte contre les parasites des végétaux, des animaux et des locaux et les compositions les renfermant.

L'invention a pour objet, sous toutes leurs formes isomères possibles, ou sous toutes les formes de mélanges isomères possibles, les composés de formule (I):

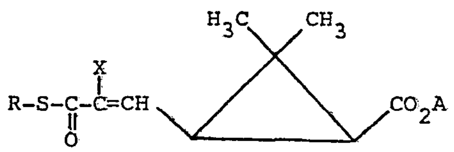

dans laquelle R représente un radical alcoyle renfermant de 1 à 18 atomes de carbone, linéaire, ramifié, saturé ou insaturé, éventuellement substitué par un ou plusieurs groupements fonctionnels identiques ou différents, ou bien R représente un radical cycloaliphatique comportant de 3 à 7 atomes de carbone éventuellement substitué par un ou plusieurs groupements fonctionnels identiques ou différents, ou bien R représente un groupement aryle, renfermant de 6 à 14 atomes de carbone éventuellement substitué par un ou plusieurs groupements fonctionnels identiques ou différents, ou bien R représente un radical hétérocyclique éventuellement substitué par un ou plusieurs groupements fonctionnels identiques ou différents, X représente un atome de fluor, de chlore ou de brome et A représente le reste d'un alcool utilisé dans la synthèse des pyréthrinoïdes et dans laquelle la double liaison éthylénique en position 1' de la chaîne latérale en position 3 du cycle cyclopropanique a la géométrie Z ou E.

Les composés de formule (I) peuvent exister sous de nombreuses formes stéréo-isomères: ils possèdent en effet deux carbones asymétriques en 1 et en 3 du cyclopropane; ils présentent également une isomérie E/Z au niveau de la double liaison; ils peuvent, de plus, présenter un ou plusieurs centres d'asymétrie dans la partie A comme dans la partie R.

Par alcool utilisé dans la synthèse des pyréthrinoïdes, on entend soit les alcools AOH qui peuvent être utilisés comme intermédiaires de préparation de dérivés pyréthrinoïdes biologiquement actifs, soit les alcools AOH dont le reste A apparaît dans les pyréthrinoïdes biologiquement actifs.

L'invention a plus spécialement pour objet les composés de formule (I) tels que définis précédemment dans laquelle A représente

— soit un radical alcoyle renfermant de 1 à 18 atomes de carbone,

— soit un radical benzyle éventuellement substitué sur les sommets aromatiques par un ou plusieurs radicaux choisis dans le groupe constitué par les radicaux alcoyles comportant de 1 à 4 atomes de carbone, les radicaux alcényles comportant de 2 à 6 atomes de carbone, les radicaux alcényloxy comportant de 2 à 6 atomes de carbone, les radicaux alcadiényles comportant de 4 à 8 atomes de carbone, le radical méthylènedioxy et les atomes d'halogène,

— soit un groupement

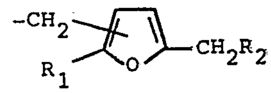

dans lequel le substituant $R_1$ représente un atome d'hydrogène ou un radical méthyle et le substituant $R_2$ un aryle monocyclique ou un groupement $-C\equiv CH$ et notamment un groupement 5-benzyl-3-furylméthyle,

— soit un groupement

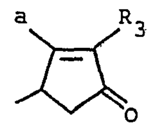

dans lequel a représente un atome d'hydrogène ou un radical méthyle et $R_3$ représente un radical organique aliphatique comportant de 2 à 6 atomes de carbone et une ou plusieurs insaturations carbone-carbone et notamment l'un des radicaux $-CH_2-CH=CH_2$, $-CH_2-CH=CH-CH_3$, $-CH_2-CH=CH-CH=CH_2$ ou $-CH_2-CH=CH-CH_2-CH_3$,

— soit un groupement

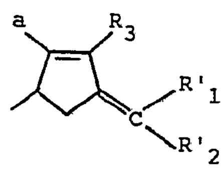

dans lequel a représente un atome d'hydrogène ou un radical méthyle, $R_3$ conserve la même signification que précédemment, $R'_1$ et $R'_2$, identiques ou différents, représentent un atome d'hydrogène, un atome d'halogène, un radical alcoyle renfermant de 1 à 6 atomes de carbone, un radical aryle comportant de 6 à 10 atomes de carbone, un groupement alcoyloxycarbonyle comportant de 2 à 5 atomes de carbone ou un groupement cyano,

— soit un groupement

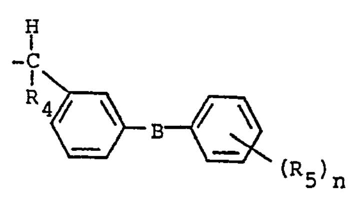

dans lequel B représente un atome d'oxygène ou de soufre ou un groupement

$$-\overset{\overset{O}{\|}}{C}- \text{ ou } -CH_2,$$

$R_4$ représente un atome d'hydrogène, un radical $-C\equiv N$, un radical méthyle, un radical $-CONH_2$, un radical $-CSNH_2$ ou un radical $-C\equiv CH$, $R_5$

représente un atome d'halogène ou un radical méthyle et n représente un nombre égal à 0,1 ou 2, et notamment le groupement 3-phénoxybenzyle, α-cyano 3-phénoxybenzyle, α-éthynyl 3-phénoxybenzyle, 3-benzoylbenzyle, 1-(3-phénoxyphényl) éthyle ou α-thioamido 3-phénoxybenzyle,

– soit un groupement

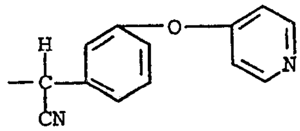

– soit un groupement

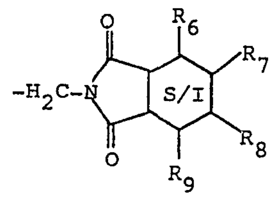

dans lequel les substituants $R_6$, $R_7$, $R_8$ et $R_9$ représentent un atome d'hydrogène, un atome de chlore ou un radical méthyle et dans lequel S/I symbolise un cycle aromatique ou un cycle analogue dihydro, tétrahydro ou hexahydro,

– soit un groupement (succimido ou maléimido) méthylène,

– soit un groupement

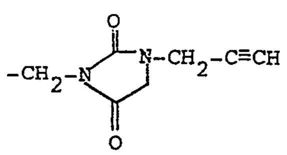

– soit un groupement

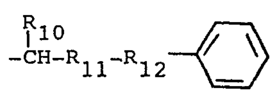

dans lequel $R_{10}$ représente un atome d'hydrogène ou un radical CN, $R_{12}$ représente un radical $-CH_2-$ ou un atome d'oxygène, $R_{11}$ représente un radical thiazolyle ou thiadiazolyle dont la liaison avec

$$-\underset{R_{10}}{\underset{|}{CH}}-$$

peut se trouver à l'une quelconque des positions disponibles, $R_{12}$ étant lié à $R_{11}$ par l'atome de carbone compris entre l'atome de soufre et un atome d'azote,

– soit un groupement

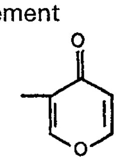

– soit un groupement

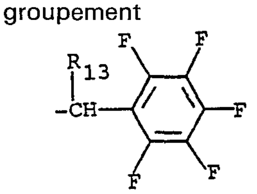

dans lequel $R_{13}$ représente un atome d'hydrogène ou un radical CN,

– soit un groupement

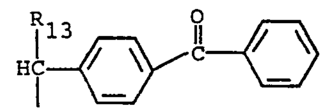

dans lequel $R_{13}$ est défini comme ci-dessus,

– soit un groupement

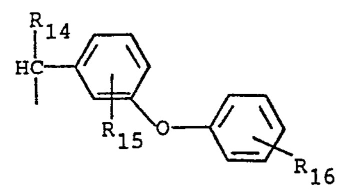

dans lequel $R_{14}$ représente un atome d'hydrogène, un radical méthyle, éthynyle ou cyano, $R_{15}$ représente un atome de fluor, de chlore ou de brome et $R_{16}$ représente un atome d'hydrogène, de fluor, de chlore ou de brome,

– soit un groupement

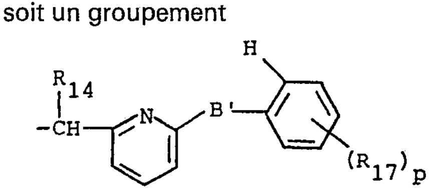

dans lequel $R_{14}$ est défini comme ci-dessus, chacun des $R_{17}$ représente indépendamment un groupement alcoyle renfermant de 1 à 4 atomes de carbone, alcoxy renfermant de 1 à 4 atomes de carbone, alcoylthio renfermant de 1 à 4 atomes de carbone, alcoylsulfonyle renfermant de 1 à 4 atomes de carbone, trifluorométhyle, 3,4-méthylènedioxy, chloro, fluoro ou bromo, p représente un nombre égal à 0, 1 ou 2 et B' représente un atome d'oxygène ou un atome de soufre.

Lorsque A représente un radical alcoyle, il s'agit de préférence du radical méthyle, éthyle, n-propyle, isopropyle, n-butyle, isobutyle, ou terbutyle.

Lorsque A représente un radical benzyle substitué par un ou plusieurs radicaux alcoyle, il s'agit de préférence des radicaux méthyle ou éthyle.

Lorsque A représente un radical benzyle substitué par un ou plusieurs radicaux alcényle, il s'agit de préférence de radicaux vinyle, allyle, 2-méthylallyle, ou isobuténylle.

Lorsque A représente un radical benzyle substitué par un ou plusieurs alcényloxy, il s'agit de préférence de radicaux vinyloxy, allyloxy, 2-méthylallyloxy ou isobuténylloxy.

Lorsque A représente un radical benzyle substitué par un radical alcadiényle, il peut s'agir du radical $-CH=CH-CH=CH_2$ ou d'un radical allénique.

Lorsque A représente un radical benzyle substitué par un ou plusieurs atomes d'halogène, il s'agit de préférence d'atomes de chlore, de brome ou de fluor.

Le substituant $R_2$ représente notamment un radical phényle.

Les substituants $R'_1$ et $R'_2$ représentent notamment un atome de fluor, de brome ou de chlore, un radical méthyle, un radical éthyle, un radical hexyle, linéaire ou ramifié, un radical phényle, un groupement méthoxycarbonyle, un groupement éthoxycarbonyle, un groupement pentoxycarbonyle, linéaire ou ramifié.

Le substituant $R_5$ représente notamment un atome de fluor, de chlore ou de brome.

Le substituant $R_{17}$ représente notamment un radical méthyle, éthyle, butyle, linéaire ou ramifié, un groupement méthoxy, éthoxy, butoxy, linéaire ou ramifié, un groupement méthylthio, éthylthio, butylthio linéaire ou ramifié, un groupement méthylsulfonyle, éthylsulfonyle, butylsulfonyle linéaire ou ramifié.

Lorsque R représente un radical alcoyle, linéaire ou ramifié, on entend par alcoyle, par exemple, un radical méthyle, éthyle, propyle, linéaire ou ramifié, butyle linéaire ou ramifié, hexyle linéaire ou ramifié, décyle linéaire ou ramifié, tétradécyle linéaire ou ramifié, octadécyle linéaire ou ramifié.

Lorsque R représente un radical alcoyle insaturé, on entend notamment par alcoyle insaturé un radical éthényle, propényle, butényle linéaire ou ramifié, hexényle linéaire ou ramifié, décényle linéaire ou ramifié, tétradécényle linéaire ou ramifié, octadécényle linéaire ou ramifié, ou encore des radicaux aliphatiques insaturés comportant deux ou plusieurs doubles liaisons.

Lorsque R représente un radical cycloaliphatique comportant de 3 à 7 atomes de carbone, il s'agit d'un cyclopropyle, d'un cyclobutyle, d'un cyclopentyle, d'un cyclohexyle, d'un cycloheptyle.

Lorsque R représente un radical cycloaliphatique comportant de 3 à 7 atomes de carbone, substitué par un ou plusieurs groupements fonctionnels, on entend, par groupement fonctionnel, un atome d'halogène, un radical alcoyle comportant de 1 à 6 atomes de carbone, un radical alcoyloxyle comportant de 1 à 6 atomes de carbone, un groupement $NO_2$.

Lorsque R représente un radical alcoyle, substitué par un ou plusieurs groupements fonctionnels, on entend, par groupement fonctionnel, un atome d'halogène, un groupement OH ou SH, un groupement OR' ou SR' dans lesquels R' représente un radical alcoyle renfermant de 1 à 8 atomes de carbone, un groupement $NO_2$ ou

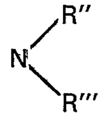

dans lequel R'' et R''', identiques ou différents, représentent un atome d'hydrogène, ou un radical alcoyle renfermant de 1 à 8 atomes de carbone, un groupement $C\equiv N$, $SO_3H$ ou $PO_4H_2$ ou un groupement $COalc_1$, $SO_2alc_2$, ou $SO_3alc_3$ dans lesquels $alc_1$, $alc_2$ et $alc_3$ représentent des radicaux alcoyle renfermant de 1 à 18 atomes de carbone.

R peut représenter également un radical alcoyle substitué par un radical aryle comme par exemple le radical benzyle ou le radical phénéthyle, lui-même éventuellement substitué par un ou plusieurs groupements OH, Oalc ou alc renfermant de 1 à 8 atomes de carbone, par un ou plusieurs groupements $CF_3$, $OCF_3$, $SCF_3$, ou par un groupement (G):

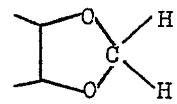

(G)

R peut représenter également un radical alcoyle substitué sur deux carbones adjacents par un groupement ($G_1$):

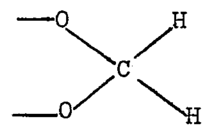

($G_1$)

ou substitué par un groupement 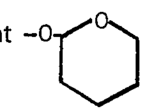

Lorsque R représente un radical alcoyle substitué par un ou plusieurs groupements fonctionnels, on peut citer comme valeurs de R les radicaux:

$-(CH_2)_n-CHal_3$ dans lequel n est un nombre entier de 1 à 8 et Hal un atome d'halogène, par exemple le radical $-CH_2-CCl_3$, $-CH_2-CF_3$, $-CH_2-CH_2-CCl_3$ ou $-CH_2-CH_2-CF_3$,

$-(CH_2)_{n_1}-CH\ Hal_2$ dans lequel Hal est défini comme ci-dessus et $n_1$ est un nombre de 0 à 8, par exemple le radical $-CH_2-CHCl_2$, $-CH_2-CHF_2$ ou $-CHF_2$,

$-(CH_2)_n-CH_2\ Hal$ dans lequel n et Hal sont définis comme ci-dessus, par exemple le radical $-CH_2-CH_2Cl$ ou $-CH_2-CH_2F$, $-C-(CHal_3)_3$ dans lequel Hal est défini comme ci-dessus, par exemple le radical $-C-(CF_3)_3$ ou 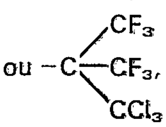,

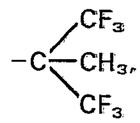 , 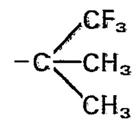 ou 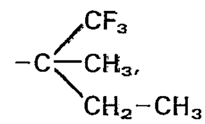,

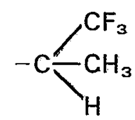 ou 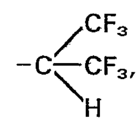,

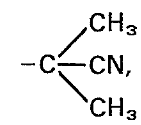, 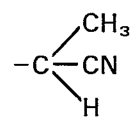 ou $-(CH_2)_n-CN$,

dans lequel n est défini comme précédemment,

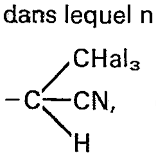 dans lequel Hal est défini comme précédemment,

par exemple le radical 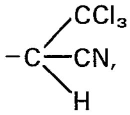

$-(CH_2)_n-OR_a$, dans lequel n est défini comme précédemment et $R_a$ représente un atome d'hydrogène ou un radical alcoyle linéaire ou ramifié, comportant de 1 à 8 atomes de carbone, par exemple le radical $-CH_2-OCH_3$, $-CH_2-CH_2-O-CH_3$, $-CH_2-CH_2-O-CH_2-CH_3$ ou $-CH_2-CH_2-OH$,

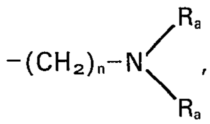 , dans lequel n et $R_a$ sont définis comme précédemment et les deux radicaux $R_a$ peuvent être différents entre eux,

par exemple le radical 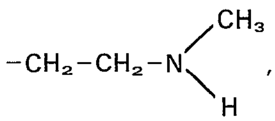 ,

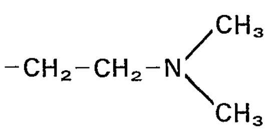

ou 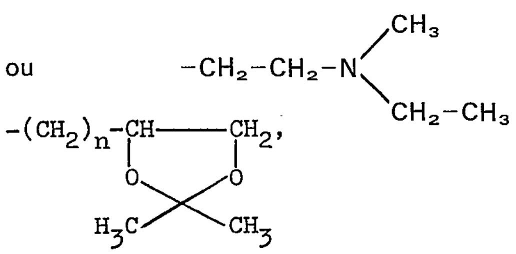

dans lequel n est défini comme précédemment, par exemple le radical 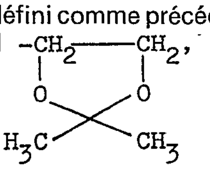

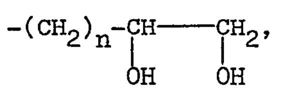

dans lequel n est défini comme précédemment, par exemple le radical 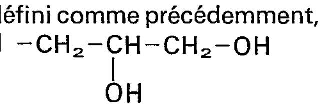

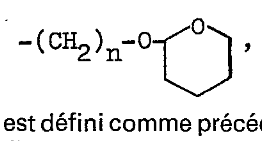

dans lequel n est défini comme précédemment, par exemple le radical

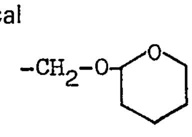

ou 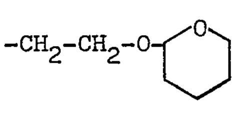 , 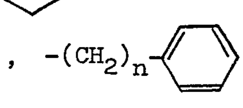 ,

dans lequel n est défini comme précédemment, par exemple le radical benzyle ou phénéthyle,

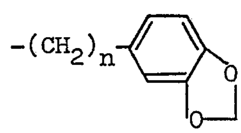 ,

dans lequel n est défini comme précédemment, par exemple le radical

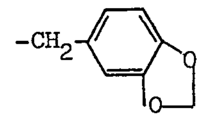 .

Lorsque R représente un radical aryle éventuellement substitué, il s'agit du radical phényle ou du radical phényle substitué par un ou plusieurs groupements OH, Oalc ou alc, renfermant de 1 à 8 atomes de carbone, ou par un groupement $CF_3$, $OCF_3$ ou $SCF_3$.

Lorsque R représente un radical hétérocyclique, il s'agit du radical pyridinyle, furannyle, thiophényle, oxazolyle ou thiazolyle.

Parmi les composés préférés de l'invention, on peut citer les composés pour lesquels la copule acide cyclopropane carboxylique est de structure 1R cis ou 1R trans.

Comme valeur préférée de A, on peut citer notamment le groupement α-cyano 3-phénoxybenzyle sous forme S, R ou RS, le groupement α-cyano 3-phénoxy 4-fluorobenzyle sous forme S, R ou RS et le groupement cyano (6-phénoxy 2-pyridyl) méthyle sous forme S, R ou RS.

On peut encore citer les restes d'alcools figurant dans le tableau exposé ci-après autres que ceux mentionnés ci-dessus.

L'invention a tout spécialement pour objet les composés pour lesquels X représente un atome de fluor, ou encore les composés pour lesquels X représente un atome de brome ou de chlore.

Parmi les composés préférés de l'invention, on peut citer tout particulièrement:

– le 1R, cis 2,2-diméthyl 3-/(E) 2-fluoro 3-oxo 3-isopropylthiopropényl/cyclopropane carboxylate de (S) cyano (3-phénoxyphényl) méthyle;

– le 1R, cis 2,2-diméthyl 3-/(E) 2-fluoro 3-oxo 3-terbutylthiopropényl/cyclopropane carboxylate de (S) cyano (3-phénoxyphényl) méthyle;

– le 1R, cis 2,2-diméthyl 3-/(E) 2-fluoro 3-oxo 3-éthylthiopropényl/cyclopropane carboxylate de (S) cyano (3-phénoxyphényl) méthyle;

– le 1R, cis 2,2-diméthyl 3-/(E) 2-fluoro 3-oxo 3-méthylthiopropényl/cyclopropane carboxylate de (S) cyano (3-phénoxyphényl) méthyle;

– le 1R, cis 2,2-diméthyl 3-/(E) 2-fluoro 3-oxo 3-isopropylthiopropényl/cyclopropane carboxylate de (S) cyano (3-phénoxy-4-fluorophényl) méthyle;

– le 1R, cis 2,2-diméthyl 3-/(E) 2-fluoro 3-oxo 3-isopropylthiopropényl/cyclopropane carboxylate de (RS) cyano (6-phénoxy-2-pyridyl) méthyle.

On peut également citer les produits répondant à la formule (I):

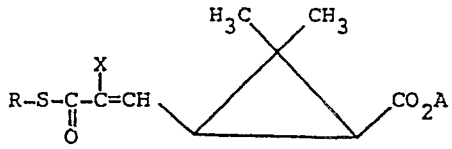 (I)

dans lesquels la valeur des substituants est donnée dans le tableau suivant.

| X | R | A |
|---|---|---|
| F | $-C_2H_5$ | 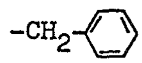 |
| F | $-C_2H_5$ | 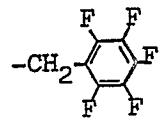 |
| F | $-C_2H_5$ | 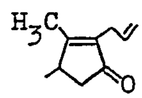 |
| F | $-C_2H_5$ | 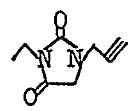 |
| F | $-C_2H_5$ | 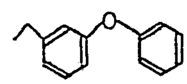 |
| F | $-C_2H_5$ | 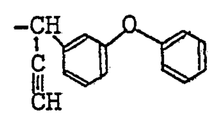 |
| F | $-C_2H_5$ | 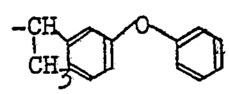 |
| F | $-C_2H_5$ | 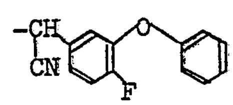 |
| F | $-CH_3$ | 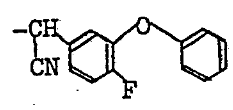 |
| F | $-CH_2CF_3$ | 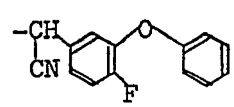 |
| F | $-C_2H_5$ | 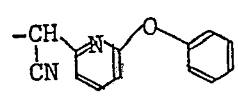 |

| X | R | A |
|---|---|---|
| F | -n-propyle | 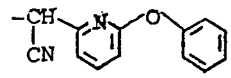 |
| F | -cyclopropyle | 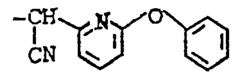 |
| F | $-(CH_2)_2OCH_3$ | 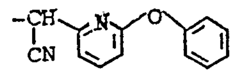 |
| F | $-CH_2-CH_2F$ | 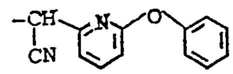 |
| Cl | $-CH_3$ | 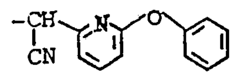 |
| Cl | $-C_2H_5$ | 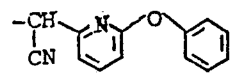 |
| Cl | -n-propyle | 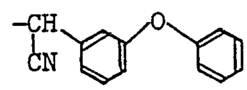 |
| Cl | -terbutyle | 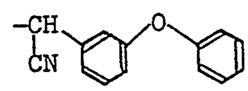 |
| Cl | $-CH_2CF_3$ | 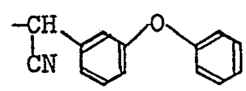 |
| Cl | $-CH_3$ | 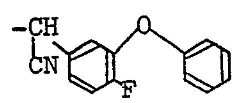 |
| Cl | $-C_2H_5$ | 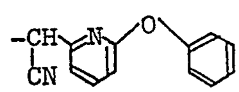 |
| Cl | $-CH_3$ | 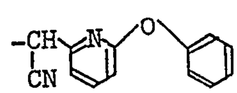 |
| Cl | $-CH_3$ | 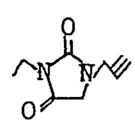 |
| Cl | $-C_2H_5$ | 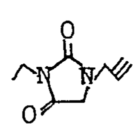 |

| X | R | A |
|---|---|---|
| Cl | -terbutyle | 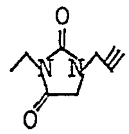 |
| Br | $-CH_3$ | 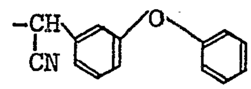 |
| Br | $-C_2H_5$ | 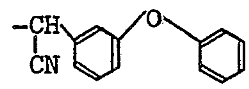 |
| Br | -terbutyle | 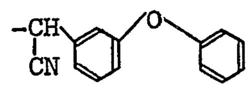 |
| Br | $-CH_3$ | 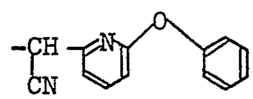 |
| Br | $-C_2H_5$ | 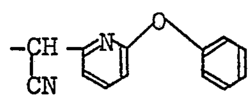 |
| Br | $-CH_3$ | 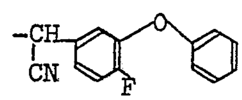 |
| Br | $-CH_3$ | 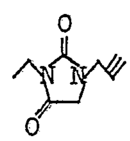 |
| Br | $-C_2H_5$ | 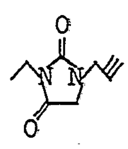 |
| Br | -terbutyle | 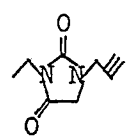 |
| Br | 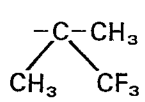 | 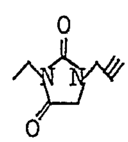 |

L'invention a également pour objet un procédé de préparation des composés de formule (I) caractérisé en ce que l'on fait réagir un acide de formule (II):

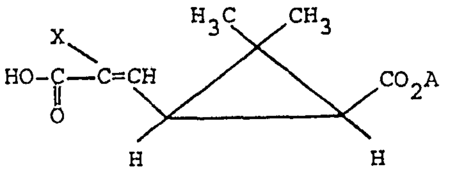

(II)

dans laquelle X et A conservent les significations précitées au sein d'un solvant organique, en présence de dicyclohexyl carbodiimide, avec un mercaptan de formule (III):

$$HS-R \qquad (III)$$

dans laquelle R conserve la signification précédente.

L'invention a plus spécialement pour objet un procédé de préparation tel que défini précédemment, caractérisé en ce que le solvant organique est choisi dans le groupe constitué par le chlorure de méthylène, le benzène, le tétrahydrofuran.

L'invention a également tout particulièrement pour objet le procédé défini précédemment, caractérisé en ce que l'on effectue la réaction en présence de diméthylamino pyridine.

Il va de soi que si les produits RSH mis en œuvre possèdent des fonctions autres que la fonction SH susceptibles de réagir lors de la réaction avec l'acide (II), il sera nécessaire de bloquer les fonctions lors de la condensation.

Les acides (II) utilisés au départ du procédé de l'invention peuvent être préparés selon le brevet français 2 491 060 ou selon la demande de brevet européen 0 050 534.

Les composés de formule (I) présentent d'intéressantes propriétés qui permettent leur utilisation dans la lutte contre les parasites; il peut s'agir par exemple de la lutte contre les parasites des végétaux, les parasites des locaux et les parasites des animaux à sang chaud. C'est ainsi que l'on peut utiliser les produits de l'invention pour lutter contre les insectes, les nématodes et les acariens parasites des végétaux et des animaux.

L'invention a donc pour objet les composés de formule (I) pour leur utilisation dans la lutte contre les parasites des végétaux, les parasites des locaux et les parasites des animaux à sang chaud.

L'invention a également pour objet les compositions destinées à la lutte contre les parasites des végétaux, les parasites des locaux et les parasites des animaux à sang chaud, caractérisées en ce qu'elles renferment comme principe actif au moins un des produits définis précédemment.

Les compositions selon l'invention sont préparées selon les procédés usuels de l'industrie agrochimique.

Elles peuvent être additionnées éventuellement d'un ou plusieurs autres agents pesticides. Ces compositions peuvent se présenter sous forme de poudres, granulés, suspensions, émulsions, solutions, solutions pour aérosols, bandes combustibles, appâts ou autres préparations employés classiquement pour l'utilisation de ce genre de composés.

Outre le principe actif, ces compositions contiennent en général un véhicule et/ou un agent tensio-actif, non ionique, assurant, en outre, une dispersion uniforme des substances constitutives du mélange. Le véhicule utilisé peut être un liquide, tel que l'eau, l'alcool, les hydrocarbures ou autres solvants organiques, une huile minérale, animale ou végétale, une poudre telle que le talc, les argiles, les silicates, le kieselguhr ou un solide combustible.

Les produits de formule (I) peuvent donc être utilisés notamment pour lutter contre les insectes dans le domaine agricole, pour lutter par exemple contre les pucerons, les larves de lépidoptères et les coléoptères. Ils sont utilisés à des doses comprises entre 10 g et 300 g de matière active à l'hectare.

Les produits de formule (I) peuvent également être utilisés pour lutter contre les insectes dans les locaux, pour lutter notamment contre les mouches, les moustiques et les blattes.

L'invention a donc notamment pour objet les compositions insecticides renfermant comme principe actif au moins l'un des produits définis ci-dessus.

L'invention a comme composition insecticide préférée les compositions renfermant le produit dont la préparation est donnée ci-après dans les exemples 1, 2, 3, 4, 7 et 8.

Les compositions insecticides selon l'invention décrites ci-dessus contiennent de préférence de 0,005% à 10% en poids de matière active.

Selon un mode opératoire avantageux, pour un usage dans les locaux, les compositions insecticides selon l'invention sont utilisées sous forme de compositions fumigantes.

Les compositions insecticides selon l'invention peuvent alors être avantageusement constituées, pour la partie non active, d'un serpentin combustible, ou encore d'un substrat fibreux incombustible. Dans ce dernier cas, le fumigant obtenu après incorporation de la matière active est placé sur un appareil chauffant tel qu'un électroémanateur.

Dans le cas où l'on utilise un serpentin insecticide, le support inerte peut être, par exemple, composé de marc de pyrèthre, poudre de Tabu (ou poudre de feuilles Machilus thumbergii), poudre de tige de pyrèthre, poudre de feuilles de cèdre, poudre de bois (telle que de la sciure de pin), amidon et poudre de coque de noix de coco.

La dose de matière active peut alors être, par exemple, de 0,03 à 1% en poids.

Dans le cas où l'on utilise un support fibreux incombustible, la dose de matière active peut alors être, par exemple, de 0,03 à 95% en poids.

Les compositions selon l'invention pour un usage dans les locaux peuvent aussi être obtenues en préparant une huile pulvérisable à base de principe actif, cette huile imbibant la mèche d'une lampe et étant alors soumise à la combustion.

La concentration du principe actif incorporé à l'huile est, de préférence, de 0,03 à 95% en poids.

Les produits de formule (I) peuvent aussi être utilisés pour lutter contre les acariens et les nématodes parasites des végétaux.

L'invention a donc pour objet les compositions acaricides renfermant comme principe actif au moins l'un des produits définis précédemment et les compositions nématicides renfermant comme principe actif au moins l'un des produits définis précédemment.

Pour l'usage nématicide, on utilise de préférence des liquides pour traitement des sols contenant de 300 à 500 g/l de principe actif.

Les composés acaricides et nématicides selon l'invention sont utilisés, de préférence, à des doses comprises entre 1 et 100 g de matière active à l'hectare.

Les compositions acaricides et nématicides peuvent se présenter notamment sous forme de poudre, granulés, suspensions, émulsions, solutions.

Pour l'usage acaricide, on utilise de préférence des poudres mouillables, pour pulvérisation foliaire, contenant de 1 à 80% ou des liquides pour pulvérisation foliaire contenant de 1 à 500 g/l de principe actif. On peut également employer des poudres pour poudrage foliaire contenant de 0,05 à 3% de matière active.

Les composés de formule (I) peuvent encore être utilisés pour lutter contre les acariens parasites des animaux, pour lutter par exemple contre les tiques et notamment les tiques de l'espèce Boophilus, ceux de l'espèce Hyalomnia, ceux de l'espèce Amblyomnia et ceux de l'espèce Rhipicephalus, ou pour lutter contre toutes sortes de gales et notamment la gale sarcoptique, la gale psoroptique et la gale chorioptique. Ils peuvent aussi être utilisés contre les poux et les helminthes.

L'invention a donc également pour objet les compositions utilisées dans la lutte contre les acariens parasites des animaux à sang chaud, caractérisées en ce qu'elles renferment au moins un produit défini ci-dessus.

Ces compositions peuvent être administrées par voie externe, par vaporisation, par shampooing, par bain ou badigeonnage. Elles peuvent être également administrées par badigeonnage de l'épine dorsale selon la méthode dite méthode «pour on». Elles peuvent être également administrées par voie digestive.

Lorsqu'il s'agit de lutter contre les acariens parasites des animaux, on peut incorporer très souvent les produits de l'invention dans des compositions alimentaires en association avec un mélange nutritif adapté à l'alimentation animale. Le mélange nutritiel peut varier selon l'espèce animale; il peut renfermer des céréales, des sucres et des grains, des tourteaux de soja, d'arachide et de tournesol, des farines d'origine animale, par exemple des farines de poissons, des acides aminés de synthèse, des sels minéraux, des vitamines et des antioxydants.

L'invention a ainsi également pour objet les compositions destinées à l'alimentation animale renfermant comme principe actif au moins l'un des produits définis précédemment.

Pour exalter l'activité biologique des produits de l'invention, on peut les additionner à des synergistes classiques utilisés en pareil cas tels que le 1-(2,5,8-trioxadodécyl) 2-propyl 4,5-méthylènedioxy benzène (ou butoxyde de pipéronyle) ou la N-(2-éthyl heptyl) bicyclo/2,2-1/5-heptène-2,3-di carboximide, ou le pipéronyl-bis-2-(2'-n-butoxy éthoxy) éthylacétal (ou tropital).

L'invention a également pour objet les associations douées d'activité insecticide, acaricide ou nématicide caractérisées en ce qu'elles contiennent comme matière active d'une part au moins un composé de formule (I) tel que défini précédemment et d'autre part un au moins des esters pyréthrinoïdes choisis dans le groupe constitué par les esters d'alléthrolones, d'alcool 3,4,5,6-tétrahydrophtalimido méthylique, d'alcool 5-benzyl 3-furyl méthylique, d'alcool 3-phénoxy benzylique et d'alcools α-cyano 3-phénoxy benzyliques des acides chrysanthémiques, par les esters d'alcool 5-benzyl 3-furyl méthylique des acides 2,2-diméthyl 3-(2-oxo 3-tétrahydrothiophénylidèneméthyl) cyclopropane 1-carboxyliques, par les esters d'alcool 3-phénoxy benzylique et d'alcools α-cyano 3-phénoxy benzyliques des acides 2,2-diméthyl 3-(2,2-dichlorovinyl) cyclopropane 1-carboxyliques, par les esters d'alcools α-cyano 3-phénoxy benzyliques d'acides 2,2-diméthyl 3-(2,2-dibromovinyl) cyclopropane 1-carboxyliques, par les esters d'alcool 3-phénoxy benzylique des acides 2-parachlorophényl 2-isopropyl acétiques, par les esters d'alléthrolones, d'alcool 3,4,5,6-tétrahydrophtalimido méthylique, d'alcool 5-benzyl 3-furyl méthylique, d'alcool 3-phénoxy benzylique et d'alcools α-cyano 3-phénoxy benzyliques des acides 2,2-diméthyl 3-(1,2,2,2-tétrahyloéthyl) cyclopropane 1-carboxyliques, dans lesquels «halo» représente un atome de fluor, de chlore ou de brome, étant entendu que les composés (I) peuvent exister sous toutes leurs formes stéréo-isomères possibles, de même que les copules acides et alcools des esters pyréthrinoïdes ci-dessus.

Les associations selon l'invention présentent notamment l'intérêt soit de permettre par la polyvalence de leur action de combattre une gamme de parasites plus étendue, soit de manifester dans certains cas, un effet de synergie.

Il va être donné maintenant, à titre non limitatif, des exemples de mise en œuvre de l'invention.

*Exemple 1*

*1R, cis 2,2-diméthyl 3-/(E) 2-fluoro 3-oxo 3-isopropylthio propényl/cyclopropane carboxylate de (S) cyano (3-phénoxyphényl) méthyle.*

Dans 5 $cm^3$ de chlorure de méthylène et 2 $cm^3$ de 2-propane thiol on introduit 2,2 g de 1R, cis 2,2-diméthyl 3/2-fluoro 3-oxo 3-hydroxy (E) propényl/cyclopropane carboxylate de (S) cyano (3-phénoxy phényl) méthyle préparé comme indiqué dans la demande de brevet européen 0050534, ajoute à +5° C une solution de 25 mg de diméthyl amino pyridine, 1,2 g de dicyclohexylcar-

bodiimide, dans 5 $cm^3$ de chlorure de méthylène, agite à +5° C pendant 1 h puis à 20° C pendant 2 h, filtre, concentre le filtrat à sec par distillation sous pression réduite, chromatographie le résidu sur silice en éluant avec un mélange d'hexane et d'acétate d'éthyle (8/2) et obtient 1,216 g de produit attendu (F = 70° C).

$/\alpha/_D$ = +66° (c=0,6%, chloroforme)

Spectre de RMN (deutérochloroforme)

– pics à 1,22-1,28 ppm attribués aux hydrogènes des méthyles géminés
– pics à 1,32-1,43 ppm attribués aux hydrogènes des méthyles de l'isopropyle
– pics à 1,9-2,05 ppm attribués à l'hydrogène en position 1 du cyclopropyle
– pics à 2,9-3,3 ppm attribués à l'hydrogène en position 3 du cyclopropyle
– pic à 3,8 ppm attribué à l'hydrogène en 2 de l'isopropyle
– pics à 5,9-6,1-6,2-6,4 ppm attribués à l'hydrogène éthylénique
– pic à 6,4 ppm attribué à l'hydrogène porté par le carbone en α du CN
– pics à 7-7,7 ppm attribués aux hydrogènes des noyaux aromatiques

*Exemple 2*

*1R, cis 2,2-diméthyl 3-/(E) 2-fluoro 3-oxo 3-tert-butylthio propényl/cyclopropane carboxylate de (S) cyano (3-phénoxyphényl) méthyle.*

On opère de manière analogue à celle de l'exemple 1, au départ de 3 g d'acide et 2 $cm^3$ de tert-butane thiol et obtient après purification par chromatographie sur silice en éluant au mélange hexane-acétate d'éthyle (90/10), 1,04 g de produit attendu.

$/\alpha/_D^{20}$ = +84° ±3° (c = 0,5% $CHCl_3$)

*Exemple 3*

*1R, cis 2,2-diméthyl 3-/(E) 2-fluoro 3-oxo 3-éthylthio propényl/cyclopropane carboxylate de (S) cyano (3-phénoxyphényl) méthyle.*

On opère de manière analogue à celle de l'exemple 1, au départ de 3 g d'acide et 1,5 $cm^3$ d'éthane thiol et obtient après purification par chromatographie sur silice en éluant au mélange hexane-acétate d'éthyle (80/20), 1,3 g de produit attendu.

$/\alpha/_D^{20}$ = +66,5° ±2,5° (c = 0,5% $CHCl_3$)

*Exemple 4*

*1R, cis 2,2-diméthyl 3-/(E) 2-fluoro 3-oxo 3-méthylthio propényl/cyclopropane carboxylate de (S) cyano 3-phénoxyphényl) méthyle.*

On opère de manière analogue à celle de l'exemple 1, au départ de 3 g d'acide et 4 g de méthane thiol et obtient après purification par chromatographie sur silice en éluant au mélange hexane-acétate d'éthyle (90/10), 1,14 g de produit attendu.

$/\alpha/_D^{20}$ = +60° ±1,5° (c = 1% $CHCl_3$)

*Exemple 5*

*1R, cis 2,2-diméthyl 3-/(E) 2-bromo 3-oxo 3-isopropylthio propényl/cyclopropane carboxylate de (S) cyano (3-phénoxyphényl) méthyle.*

*Stade A*

*1R, cis 2,2-diméthyl 3-/(E) 2-bromo 3-oxo 3-hydroxy propényl/cyclopropane carboxylate de (S) cyano (3-phénoxyphényl) méthyle.*

On porte à 130-140° C pendant 25 min, un mélange de 4 g de 1R, cis 2,2-diméthyl 3-/(E) 2-bromo 3-oxo 3-tert-butyloxy propényl/cyclopropane carboxylate de (S) cyano (3-phénoxyphényl) méthyle (décrit dans la demande européenne 0 050 534), 50 $cm^3$ de toluène et 0,4 g d'acide paratoluène sulfonique, refroidit à 20° C, ajoute de l'eau, décante, lave à l'eau, sèche et évapore le solvant. On chromatographie le résidu sur silice en éluant au mélange hexane-acétate d'éthyle-acide acétique (70/30/1) et obtient 3,6 g de produit attendu.

*Stade B*

*1R, cis 2,2-diméthyl 3-/(E) 2-bromo 3-oxo 3-isopropylthio propényl/cyclopropane carboxylate de (S) cyano (3-phénoxyphényl) méthyle.*

On opère de manière analogue à celle décrite à l'exemple 1, au départ de 3,6 g d'acide obtenu au stade A et 5 $cm^3$ de 2-propane thiol et obtient après purification par chromatographie sur silice en éluant au benzène, 1,3 g de produit attendu.

$/\alpha/_D^{20}$ = +56,5° ±2,5° (c = 0,7% toluène) F = 99° C.

*Exemple 6*

*1R, cis 2,2-diméthyl 3-/(E) 2-chloro 3-oxo 3-isopropylthio propényl/cyclopropane carboxylate de (S) cyano (3-phénoxyphényl) méthyle.*

*Stade A*

*1R, cis 2,2-diméthyl 3-/(E) 2-chloro 3-oxo 3-hydroxy propényl/cyclopropane carboxylate de (S) cyano (3-phénoxyphényl) méthyle.*

On opère de manière analogue à celle du stade A de l'exemple 5, au départ de 3 g de 1R, cis 2,2-diméthyl 3-/(E) 2-chloro 3-oxo 3-tert-butyloxy propényl/cyclopropane carboxylate de (S) cyano (3-phénoxyphényl) méthyle (décrit dans la demande européenne 0 050 534) et obtient 2,5 g de produit attendu.

*Stade B*

*1R, cis 2,2-diméthyl 3-/(E) 2-chloro 3-oxo 3-isopropylthio propényl/cyclopropane carboxylate de (S) cyano (3-phénoxyphényl) méthyle.*

On opère de manière analogue à celle décrite à l'exemple 1, au départ de 2,3 g de produit obtenu au stade A et 5 $cm^3$ de 2-propane thiol et obtient après purification par chromatographie sur silice en éluant au mélange benzène-hexane (1/1), 1,2 g de produit attendu. F = 101-102° C.

$/\alpha/_D^{20}$ = +70° ±2° (c = 1% toluène)

*Exemple 7*

*1R, cis 2,2-diméthyl 3-/(E) 2-fluoro 3-oxo 3-isopropylthio propényl/cyclopropane carboxylate de (S) cyano (3-phénoxy 4-fluorophényl) méthyle.*

On opère de manière analogue à celle décrite à l'exemple 1, au départ de 3,6 g de 1R, cis 2,2-diméthyl 3-/(E) 2-fluoro 3-oxo 3-hydroxy propényl/cyclopropane carboxylate de (S) cyano (3-phénoxy 4-fluorophényl) méthyle (décrit dans la demande européenne 0 050 534) et 1 $cm^3$ de 2-propane thiol et obtient après purification par chromatographie sur silice en éluant au mélange hexane-acétate d'éthyle (8/2), 1,9 g de produit attendu. F = 110° C.
$/\alpha/_D^{20} = +73° \pm 3°$ (c = 0,5% $CHCl_3$)

*Exemple 8*

*1R, cis 2,2-diméthyl 3-/(E) 2-fluoro 3-oxo 3-isopropylthio propényl/cyclopropane carboxylate de (RS) cyano (6-phénoxy 2-pyridyl) méthyle.*

*Stade A*

*1R, cis 2,2-diméthyl 3-/(E) 2-fluoro 3-oxo 3-terbutoxy propényl/cyclopropane carboxylate de (RS) cyano (6-phénoxy 2-pyridyl) méthyle.*

On ajoute 1,75 g de (RS) cyano (6-phénoxy 2-pyridyl) méthanol à une solution de 2 g d'acide 1R, cis 2,2-diméthyl 3-/(E) 2-fluoro 3-oxo 3-tert-butoxy propényl/cyclopropane carboxylique (décrit dans la demande européenne 0 050 534) dans 20 $cm^3$ de chlorure de méthylène. On agite à 5° C et ajoute 0,04 g de diméthylaminopyridine et 1,6 g de dicyclohexylcarbodiimide dans 5 $cm^3$ de chlorure de méthylène. On agite pendant 4 h à 20° C, filtre, évapore le filtrat et chromatographie le résidu sur silice en éluant au mélange hexane-acétate d'éthyle (8/2). On obtient 3,52 g de produit attendu.

*Stade B*

*1R, cis 2,2-diméthyl 3-/(E) 2-fluoro 3-oxo 3-hydroxy propényl/cyclopropane carboxylate de (RS) cyano (6-phénoxy 2-pyridyl) méthyle.*

On porte au reflux, jusqu'à fin de dégagement gazeux, un mélange de 3,5 g de produit obtenu au stade A, 50 $cm^3$ de toluène et 0,5 g d'acide paratoluène sulfonique. On refroidit, filtre et amène le filtrat à sec. On obtient 2,8 g de produit attendu utilisé tel quel pour le stade suivant.

*Stade C*

*1R, cis 2,2-diméthyl 3-/(E) 2-fluoro 3-oxo 3-isopropylthio propényl/cyclopropane carboxylate de (RS) cyano (6-phénoxy 2-pyridyl) méthyle.*

On opère de manière analogue à celle décrite à l'exemple 1, au départ de 2,8 g de produit obtenu au stade B et 1 $cm^3$ de 2-propane thiol et obtient après purification par chromatographie sur silice en éluant au mélange hexane-acétate d'éthyle (8/2) puis au toluène 1,23 g de produit attendu.
$/\alpha/_D^{20} = +75° \pm 4°$ (c = 0,3% $CHCl_3$).

*Exemple 9*

*Préparation d'un concentré soluble*

On effectue un mélange homogène de:

| | |
|---|---|
| – produit de l'exemple 1 | 0,25 g |
| – butoxyde de pipéronyle | 1 g |
| – tween 80 | 0,25 g |
| – topanol A | 0,1 g |
| – eau | 98,4 g |

*Exemple 10*

*Préparation d'un concentré émulsifiable*

On mélange intimement:

| | |
|---|---|
| – produit de l'exemple 3 | 0,015 g |
| – butoxyde de pipéronyle | 0,5 g |
| – topanol A | 0,1 g |
| – tween 80 | 3,5 g |
| – xylène | 95,885 g |

*Exemple 11*

*Préparation d'un concentré émulsifiable*

On effectue un mélange homogène de:

| | |
|---|---|
| – produit de l'exemple 7 | 1,5 g |
| – tween 80 | 20 g |
| – topanol A | 0,1 g |
| – xylène | 78,4 g |

*Exemple 12*

*Préparation d'une composition fumigène*

On mélange de façon homogène:

| | |
|---|---|
| – produit de l'exemple 7 | 0,25 g |
| – poudre de tabu | 25 g |
| – poudre de feuille de cèdre | 40 g |
| – poudre de bois de pin | 33,75 g |
| – vert brillant | 0,5 g |
| – p nitrophénol | 0,5 g |

*Exemple 13*

*Composition vétérinaire*

On a préparé une solution répondant à la formule suivante:

| | |
|---|---|
| – composé de l'exemple 1 | 5 g |
| – butoxyde de pipéronyle | 25 g |
| – polysorbate 80 | 10 g |
| – triton X 100 | 25 g |
| – acétate de tocophénol | 1 g |
| – alcool éthylique q.s.p. | 100 $cm^3$ |

On obtient ainsi une solution que l'on dilue dans 5 l d'eau au moment de l'emploi.

*Activité biologique*

*Etude de l'activité insecticide et acaricide des composés de l'invention:*

a) *Etude de l'effet létal sur mouche domestique*

Les insectes tests sont des mouches domestiques femelles âgées de 4 à 5 jours. On opère par application topique de 1 µl de solution acétonique sur le thorax dorsal des insectes à l'aide du micromanipulateur d'Arnold. On utilise 50 individus par traitement. On effectue le contrôle de mortalité vingt-quatre heures après traitement.

Les résultats obtenus, exprimés en DL50 ou dose (en nanogrammes) par individu nécessaire pour tuer 50% des insectes, sont les suivants:

| Composé de l'exemple | DL50 ng/insecte |
|---|---|
| 1 | 1,12 |
| 3 | 0,5 |
| 7 | 0,65 |
| 8 | 1,9 |

b) *Etude de l'effet létal sur blatte*

Les tests sont effectués par contact sur film de verre, par dépôt à la pipette, de solutions acétoniques de différentes concentrations sur fond de boîte de Petri en verre dont les bords ont été préalablement talqués afin d'éviter la fuite des insectes. On détermine la concentration létale 50 (CL50) en $mg/m^2$.

Les résultats expérimentaux obtenus sont les suivants:

| Composé de l'exemple | KT50 en min |
|---|---|
| 1 | 0,23 |
| 2 | 0,20 |

c) *Etude de l'effet d'abattage sur mouche domestique*

Les insectes tests sont des mouches domestiques femelles âgées de 4 jours. On opère par pulvérisation directe à la concentration de 0,25 g/l en chambre de Kearns et March en utilisant comme solvant un mélange d'acétone (5%) et d'Isopar L (solvant pétrolier) (quantité de solvant utilisée: 2 ml en une seconde). On utilise 50 insectes par traitement. On effectue les contrôles toutes les minutes jusqu'à 10 minutes, puis à 15 minutes, et l'on détermine le KT50 par les méthodes habituelles.

Les résultats expérimentaux obtenus sont les suivants:

| Composé de l'exemple | KT50 en min |
|---|---|
| 1 | 11,3 |
| 3 | 3,9 |
| 4 | 5,4 |
| 8 | 6,0 |

d) *Etude de l'effet létal sur larves de Spodoptera Littoralis*

Les essais sont effectués par application topique d'une solution acétonique à l'aide du micromanipulateur d'Arnold sur le thorax dorsal des larves. On utilise 15 larves par dose de produit à tester. Les larves utilisées sont des larves du quatrième stade larvaire, c'est-à-dire âgées d'environ 10 jours lorsqu'elles sont élevées à 24° C et 65% d'humidité relative. Après traitement les individus sont placés sur un milieu nutritif artificiel.

On détermine la DL50 en nanogrammes par individu nécessaire pour tuer 50% des insectes.

Les résultats expérimentaux obtenus sont les suivants:

| Composé de l'exemple | DL50 ng/insecte |
|---|---|
| 1 | 12,3 |
| 3 | 2,5 |
| 4 | 5,4 |
| 7 | 5,6 |

e) *Etude de l'effet létal sur Acanthocelide subtectus*

La méthode utilisée est analogue à celle employée pour Spodoptera littoralis. On détermine la DL50 en ng par individu:

| Composé de l'exemple | DL50 ng/insecte |
|---|---|
| 1 | 5,86 |
| 2 | 1,82 |
| 3 | 1,86 |
| 4 | 3,74 |
| 7 | 0,49 |

f) *Etude de l'effet létal sur Aphis cracivora*

On utilise des adultes après 7 jours et l'on emploie 10 Aphis par concentration utilisée. On utilise une méthode de contact-injection. On effectue le traitement au pistolet de Fisher d'une feuille de fève que l'on dépose dans une boîte de Petri en matière plastique sur une rondelle de papier humidifiée. Le traitement est effectué à l'aide de 2 ml de solution acétonique de produit à tester (1 ml par face de feuille). L'infestation par insecte est effectuée après séchage de la feuille. On maintient les insectes en contact avec la feuille pendant une heure. On place les insectes sur des feuilles non traitées et contrôle la mortalité au bout de 24 heures. On détermine la CL50 en mg/hl.

Les résultats expérimentaux obtenus sont les suivants:

| Composé de l'exemple | CL50 en mg/hl |
|---|---|
| 1 | 0,6 |
| 2 | 1,3 |
| 7 | 1,0 |
| 8 | 1,8 |

g) *Etude acaricide des composés sur Tetranychus urticae*

On utilise des plants de haricot comportant 2 feuilles infestées de 25 femelles de Tetranychus

urticae par feuille et mis sous bonnette aérée sous plafond lumineux en lumière constante. Les plants sont traités au pistolet Fisher: 4 ml de solution toxique par plant d'un mélange à volume égal d'eau et d'acétone. On laisse sécher pendant 12 heures puis on procède à l'infestation. Les contrôles de mortalité sont effectués 80 heures après. On détermine la CL50 en mg/hl.

| Composé de l'exemple | CL50 en mg/hl |
|---|---|
| 1 | 424 |
| 7 | 938 |

h) *Conclusion*

Les produits de formule (I) sont doués d'une bonne activité insecticide et d'une bonne activité acaricide.

**Revendications**

1. Sous toutes leurs formes isomères possibles, ou sous toutes les formes de mélanges isomères possibles, les composés de formule I

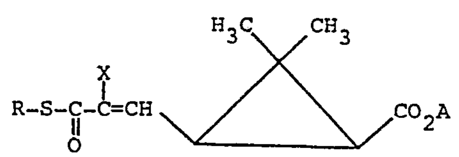

(I)

dans laquelle R représente un radical alcoyle renfermant de 1 à 18 atomes de carbone linéaire, ramifié, saturé ou insaturé, éventuellement substitué par un ou plusieurs groupements fonctionnels identiques ou différents, ou bien R représente un radical cycloaliphatique comportant de 3 à 7 atomes de carbone éventuellement substitué par un ou plusieurs groupements fonctionnels identiques ou différents, ou bien R représente un groupement aryle, renfermant de 6 à 14 atomes de carbone éventuellement substitué par un ou plusieurs groupements fonctionnels identiques ou différents, ou bien R représente un radical hétérocyclique éventuellement substitué par un ou plusieurs groupements fonctionnels identiques ou différents, X représente un atome de fluor, de chlore ou de brome et A représente le reste d'un alcool utilisé dans la synthèse des pyréthrinoïdes et dans laquelle la double liaison éthylénique en position 1' de la chaîne latérale en position 3 du cycle cyclopropanique a la géométrie Z ou E.

2. Les composés de formule I tels que définis à la revendication I dans laquelle A représente

– soit un radical alcoyle renfermant de 1 à 18 atomes de carbone,

– soit un radical benzyle éventuellement substitué sur les sommets aromatiques par un ou plusieurs radicaux choisis dans le groupe constitué par les radicaux alcoyles comportant de 1 à 4 atomes de carbone, les radicaux alcényles comportant de 2 à 6 atomes de carbone, les radicaux alcénylоxy comportant de 2 à 6 atomes de carbone, les radicaux alcadiényles comportant de 4 à 8 atomes de carbone, le radical méthylène dioxy et les atomes d'halogène,

– soit un groupement

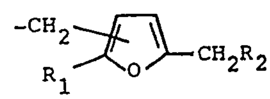

dans lequel le substituant $R_1$ représente un atome d'hydrogène ou un radical méthyle et le substituant $R_2$ un aryle monocyclique ou un groupement $-C\equiv CH$ et notamment un groupement 5-benzyl-3-furylméthyle,

– soit un groupement

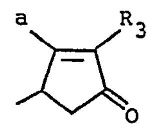

dans lequel a représente un atome d'hydrogène ou un radical méthyle et $R_3$ représente un radical organique aliphatique comportant de 2 à 6 atomes de carbone et une ou plusieurs insaturations carbone-carbone et notamment l'un des radicaux $-CH_2-CH=CH_2$, $-CH_2-CH=CH-CH_3$, $-CH_2-CH=CH-CH=CH_2$ ou $-CH_2-CH=CH-CH_2-CH_3$,

– soit un groupement

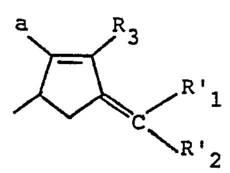

dans lequel a représente un atome d'hydrogène ou un radical méthyle, $R_3$ conserve la même signification que précédemment, $R'_1$ et $R'_2$, identiques ou différents, représentent un atome d'hydrogène, un atome d'halogène, un radical alcoyle renfermant de 1 à 6 atomes de carbone, un radical aryle comportant de 6 à 10 atomes de carbone, un groupement alcoyloxycarbonyle comportant de 2 à 5 atomes de carbone ou un groupement cyano,

– soit un groupement

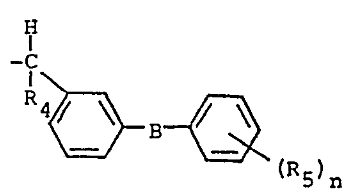

dans lequel B représente un atome d'oxygène ou de soufre ou un groupement

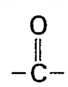 ou $-CH_2$,

$R_4$ représente un atome d'hydrogène, un radical $-C\equiv N$, un radical méthyle, un radical $-CONH_2$, un radical $-CSNH_2$ ou un radical $-C\equiv CH$, $R_5$

représente un atome d'halogène ou un radical méthyle et n représente un nombre égal à 0,1 ou 2, et notamment le groupement 3-phénoxybenzyle, α-cyano 3-phénoxybenzyle, α-éthynyl 3-phénoxybenzyle, 3-benzoylbenzyle, 1-(3-phénoxyphényl) éthyle ou α-thioamido 3-phénoxybenzyle,

– soit un groupement

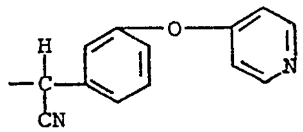

– soit un groupement

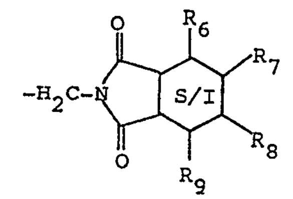

dans lequel les substituants $R_6$, $R_7$, $R_8$ et $R_9$ représentent un atome d'hydrogène, un atome de chlore ou un radical méthyle et dans lequel S/I symbolise un cycle aromatique ou un cycle analogue dihydro, tétrahydro ou hexahydro,

– soit un groupement (succimido ou maléimido) méthylène,

– soit un groupement

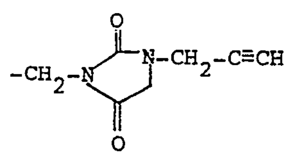

– soit un groupement

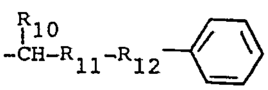

dans lequel $R_{10}$ représente un atome d'hydrogène ou un radical CN, $R_{12}$ représente un radical $-CH_2-$ ou un atome d'oxygène, $R_{11}$ représente un radical thiazolyle ou thiadiazolyle dont la liaison avec

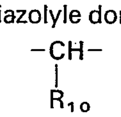

peut se trouver à l'une quelconque des positions disponibles, $R_{12}$ étant lié à $R_{11}$ par l'atome de carbone compris entre l'atome de soufre et un atome d'azote,

– soit un groupement

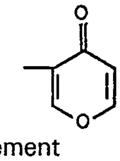

– soit un groupement

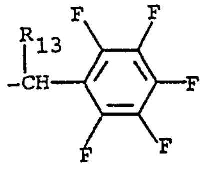

dans lequel $R_{13}$ représente un atome d'hydrogène ou un radical CN,

– soit un groupement

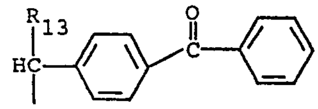

dans lequel $R_{13}$ est défini comme ci-dessus,

– soit un groupement

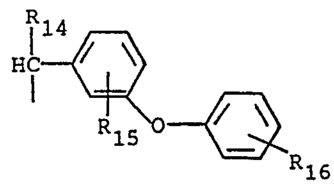

dans lequel $R_{14}$ représente un atome d'hydrogène, un radical méthyle, éthynyle ou cyano, $R_{15}$ représente un atome de fluor, de chlore ou de brome et $R_{16}$ représente un atome d'hydrogène, de fluor, de chlore ou de brome,

– soit un groupement

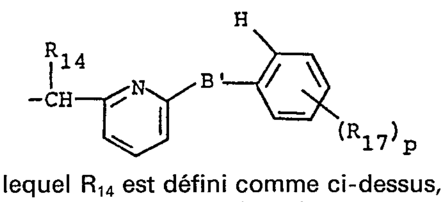

dans lequel $R_{14}$ est défini comme ci-dessus, chacun des $R_{17}$ représente indépendamment un groupement alcoyle renfermant de 1 à 4 atomes de carbone, alcoxy renfermant de 1 à 4 atomes de carbone, alcoylthio renfermant de 1 à 4 atomes de carbone, alcoyl sulfonyl renfermant de 1 à 4 atomes de carbone, trifluorométhyl, 3,4-méthylène dioxy, chloro, fluoro ou bromo, p représente un nombre égal à 0, 1 ou 2 et B' représente un atome d'oxygène ou un atome de soufre.

3. Les composés de formule (I) tels que définis à la revendication 1 ou 2, pour lesquels la copule acide cyclopropane carboxylique est de structure 1R cis ou 1R trans.

4. Les composés de formule (I) tels que définis à la revendication 1 ou 2, pour lesquels A représente le groupement α-cyano 3-phénoxybenzyle sous forme S, R ou RS, le groupement α-cyano 3-phénoxy 4-fluorobenzyle sous forme S, R ou RS ou le groupement cyano (6-phénoxy 2-pyridyl) méthyle sous forme S, R ou RS.

5. Les composés de formule (I) tels que définis à l'une quelconque des revendications 1 à 4, pour lesquels X représente un atome de fluor.

6. Les composés de formule (I) tels que définis à l'une quelconque des revendications 1 à 4 pour lesquels X représente un atome de brome.

7. Les composés de formule (I) tels que définis à l'une quelconque des revendications 1 à 4, pour lesquels X représente un atome de chlore.

8. L'un quelconque des composés dont les noms suivent répondant à la formule (I):

– le 1R, cis 2,2-diméthyl 3-/(E) 2-fluoro 3-oxo 3-isopropylthio propényl/cyclopropane carboxylate de (S) cyano (3-phénoxyphényl) méthyle;

– le 1 R, cis 2,2-diméthyl 3-/(E) 2-fluoro 3-oxo 3-tert-butyl thio propényl/cyclopropane carboxylate de (S) cyano (3-phénoxyphényl) méthyle;

– le 1 R, cis 2,2-diméthyl 3-/(E) 2-fluoro 3-oxo 3-éthylthio propényl/cyclopropane carboxylate de (S) cyano (3-phénoxyphényl) méthyle;

– le 1 R, cis 2,2-diméthyl 3-/(E) 2-fluoro 3-oxo 3-méthylthio propényl/cyclopropane carboxylate de (S) cyano (3-phénoxyphényl) méthyle;

– le 1 R, cis 2,2-diméthyl 3-/(E) 2-fluoro 3-oxo 3-isopropylthio propényl/cyclopropane carboxylate de (S) cyano (3-phénoxy 4-fluorophényl) méthyle;

– le 1 R, cis 2,2-diméthyl 3-/(E) 2-fluoro 3-oxo 3-isopropylthio propényl/cyclopropane carboxylate de (RS) cyano (6-phénoxy 2-pyridyl) méthyle.

9. Procédé de préparation des composés de formule (I) telle que définie à l'une quelconque des revendications 1 à 8, caractérisé en ce que l'on fait réagir un acide de formule (II)

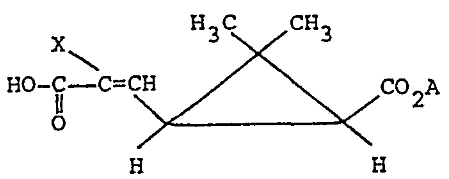

(II)

dans laquelle X et A conservent les significations de la revendication 1, au sein d'un solvant organique, en présence de dicyclohexyl carbodiimide, avec un mercaptan de formule (III)

$$HS-R \qquad (III)$$

dans laquelle R conserve les significations de la revendication 1.

10. Procédé de préparation selon la revendication 9, caractérisé en ce que le solvant organique est choisi dans le groupe constitué par le chlorure de méthylène, le benzène, le tétrahydrofuran.

11. Procédé de préparation selon l'une des revendications 9 ou 10, caractérisé en ce que l'on effectue la réaction en présence de diméthylamino pyridine.

12. Les composés de formule (I), tels que définis à l'une quelconque des revendications 1 à 8 pour leur utilisation dans la lutte contre les parasites des végétaux, les parasites des locaux et les parasites des animaux à sang chaud.

13. Les compositions destinées à la lutte contre les parasites des végétaux, les parasites des locaux et les parasites des animaux à sang chaud, caractérisées en ce qu'elles renferment comme principe actif au moins un des produits définis à l'une quelconque des revendications 1 à 8.

14. Les compositions insecticides renfermant comme principe actif au moins l'un des produits définis à l'une quelconque des revendications 1 à 7.

15. Les compositions insecticides renfermant comme principe actif au moins un produit défini à la revendication 8.

16. Les compositions acaricides renfermant comme principe actif au moins l'un des produits définis à l'une quelconque des revendications 1 à 8.

17. Les compositions nématicides renfermant comme principe actif au moins l'un des produits définis à l'une quelconque des revendications 1 à 8.

18. Les compositions acaricides utilisées dans la lutte contre les parasites des animaux à sang chaud, caractérisées en ce qu'elles renferment comme principe actif au moins un produit défini à l'une quelconque des revendications 1 à 8.

19. Les compositions destinées à l'alimentation animale renfermant comme principe actif au moins l'un des produits définis à l'une quelconque des revendications 1 à 8.

20. Associations douées d'activité insecticide, acaricide ou nématicide, caractérisées en ce qu'elles contiennent comme matière active, d'une part un au moins des composés de formule générale (I), tels que définis à la revendication 1, et d'autre part un au moins des esters pyréthrinoïdes choisis dans le groupe constitué par les esters d'alléthrolones, d'alcool 3,4,5,6-tétrahydrophtalimido méthylique, d'alcool 5-benzyl 3-furyl méthylique, d'alcool 3-phénoxy benzylique et d'alcools α-cyano 3-phénoxy benzyliques des acides chrysanthémiques, par les esters d'alcool 5-benzyl 3-furyl méthylique des acides 2,2-diméthyl 3-(2-oxo 3-tétrahydrothiophénylidène méthyl) cyclopropane 1-carboxyliques, par les esters d'alcool 3-phénoxy benzylique et d'alcools α-cyano 3-phénoxy benzyliques des acides 2,2-diméthyl 3-(2,2-dichlorovinyl) cyclopropane 1-carboxyliques, par les esters d'alcools α-cyano 3-phénoxy benzyliques d'acides 2,2-diméthyl 3-(2,2-dibromovinyl) cyclopropane 1-carboxyliques, par les esters d'alcool 3-phénoxy benzylique des acides 2-parachlorophényl 2-isopropyl acétiques, par les esters d'alléthrolones, d'alcool 3,4,5,6-tétrahydrophtalimido méthylique, d'alcool 5-benzyl 3-furyl méthylique, d'alcool 3-phénoxy benzylique et d'alcools α-cyano 3-phénoxy benzyliques des acides 2,2-diméthyl 3-(1,2,2,2-tétrahaloéthyl) cyclopropane 1-carboxyliques, dans lesquels «halo» représente un atome de fluor, de chlore ou de brome, étant entendu que les composés (I) peuvent exister sous toutes leurs formes stéréo-isomères possibles, de même que les copules acides et alcools des esters pyréthrinoïdes ci-dessus.

## Patentansprüche

1. In sämtlichen ihrer möglichen isomeren Formen oder in sämtlichen Formen der möglichen Isomeren-Gemische die Verbindungen der Formel I

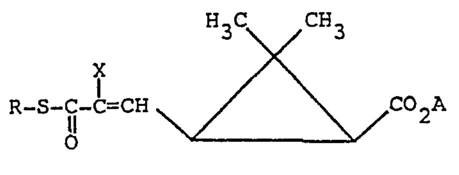

(I)

worin R einen linearen, verzweigten, gesättigten oder ungesättigten Alkylrest mit 1 bis 18 Kohlenstoffatomen, der gegebenenfalls durch eine oder mehrere gleiche oder verschiedene funktionelle Gruppen substituiert ist, bedeutet, oder R einen cycloaliphatischen Rest mit 3 bis 7 Kohlenstoffatomen, der gegebenenfalls durch eine oder mehrere gleiche oder verschiedene funktionelle Gruppen substituiert ist, bedeutet, oder R eine Arylgruppe mit 6 bis 14 Kohlenstoffatomen, die gegebenenfalls durch eine oder mehrere gleiche oder verschiedene funktionelle Gruppen substituiert ist, bedeutet, oder R einen heterocyclischen Rest, der gegebenenfalls durch eine oder mehrere gleiche oder verschiedene funktionelle Gruppen substituiert ist, bedeutet, X ein Fluor-, Chlor- oder Bromatom darstellt, und A den Rest eines bei der Synthese der Pyrethrinoide verwendeten Alkohols bedeutet und worin die ethylenische Doppelbindung in 1'-Stellung der Seitenkette in 3-Stellung des Cyclopropanrings die Z- oder E-Geometrie aufweist.

2. Die Verbindungen der Formel I gemäss Anspruch 1, worin A entweder einen Alkylrest mit 1 bis 18 Kohlenstoffatomen bedeutet oder einen Benzylrest bedeutet, der gegebenenfalls an den aromatischen Spitzen durch einen oder mehrere Reste substituiert ist, ausgewählt unter den Alkylresten mit 1 bis 4 Kohlenstoffatomen, den Alkenylresten mit 2 bis 6 Kohlenstoffatomen, den Alkenyloxyresten mit 2 bis 6 Kohlenstoffatomen, den Alkadienylresten mit 4 bis 8 Kohlenstoffatomen, dem Methylendioxyrest und den Halogenatomen oder eine Gruppe

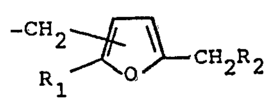

worin der Substituent $R_1$ ein Wasserstoffatom oder einen Methylrest bedeutet und der Substituent $R_2$ einen monocyclischen Arylrest oder eine Gruppe $-C\equiv CH$ bedeutet, und insbesondere eine 5-Benzyl-3-furylmethylgruppe bedeutet, oder eine Gruppe

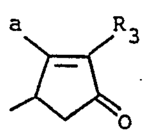

bedeutet, worin a ein Wasserstoffatom oder einen Methylrest darstellt und $R_3$ einen aliphatischen organischen Rest mit 2 bis 6 Kohlenstoffatomen und einer oder mehreren Kohlenstoff-Kohlenstoff-Unsättigungen und insbesondere einen der Reste $-CH_2-CH=CH_2$, $-CH_2-CH=CH-CH_3$, $-CH_2-CH=CH-CH=CH_2$ oder $-CH_2-CH=CH-CH_2-CH_3$ darstellt, oder eine Gruppe

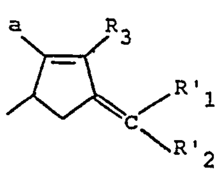

bedeutet, worin a ein Wasserstoffatom oder einen Methylrest bedeutet, $R_3$ die vorstehend angegebene Bedeutung besitzt, $R'_1$ und $R'_2$, die gleich oder verschieden sein können, ein Wasserstoffatom, ein Halogenatom, einen Alkylrest mit 1 bis 6 Kohlenstoffatomen, einen Arylrest mit 6 bis 10 Kohlenstoffatomen, eine Alkoxycarbonylgruppe mit 2 bis 5 Kohlenstoffatomen oder eine Cyanogruppe darstellen, oder eine Gruppe

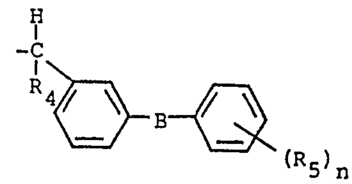

worin B ein Sauerstoff- oder Schwefelatom oder eine Gruppe

$$-\overset{\overset{\displaystyle O}{\|}}{C}- \text{ oder } -CH_2-,$$

bedeutet, $R_4$ ein Wasserstoffatom, einen Rest $-C\equiv N$, einen Methylrest, einen Rest $-CONH_2$, einen Rest $-CSNH_2$ oder einen Rest $-C\equiv CH$ bedeutet, $R_5$ ein Halogenatom oder einen Methylrest bedeutet und n eine ganze Zahl entsprechend 0, 1 oder 2 darstellt, und insbesondere die 3-Phenoxybenzyl-, α-Cyano-3-phenoxybenzyl-, α-Ethinyl-3-phenoxybenzyl-, 3-Benzoylbenzyl-, 1-(3-Phenoxyphenyl)-ethyl- oder α-Thioamido-3-phenoxybenzylgruppe bedeutet, oder eine Gruppe

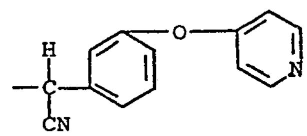

bedeutet oder eine Gruppe

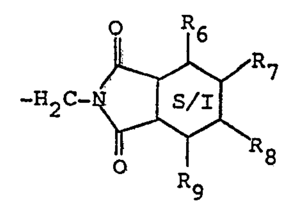

bedeutet, worin die Substituenten $R_6$, $R_7$, $R_8$ und $R_9$ ein Wasserstoffatom, ein Chloratom oder einen Methylrest bedeuten, und worin S/I einen aromatischen Ring oder einen analogen Dihydro-, Tetrahydro- oder Hexahydroring symbolisiert, oder eine (Succinimido- oder Maleimido)-methylengruppe bedeutet, oder eine Gruppe

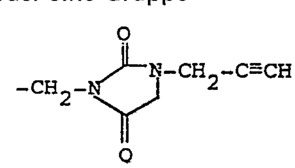

bedeutet oder eine Gruppe

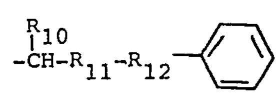

bedeutet, worin $R_{10}$ ein Wasserstoffatom oder einen CN-Rest darstellt, $R_{12}$ einen Rest $-CH_2-$ oder ein Sauerstoffatom bedeutet, $R_{11}$ einen Thiazolyl- oder Thiadiazolylrest bedeutet, dessen Verknüpfung mit

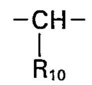

sich in irgendeiner der verfügbaren Positionen befinden kann, wobei $R_{12}$ an $R_{11}$ über das sich zwischen dem Schwefelatom und einem Stickstoffatom befindliche Kohlenstoffatom gebunden ist, oder eine Gruppe

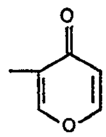

bedeutet oder eine Gruppe

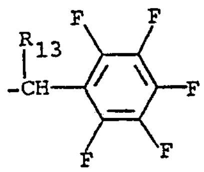

bedeutet, worin $R_{13}$ ein Wasserstoffatom oder einen CN-Rest bedeutet, oder eine Gruppe

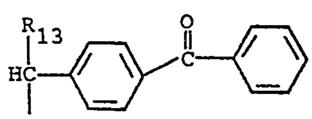

bedeutet, worin $R_{13}$ wie vorstehend definiert ist, oder eine Gruppe

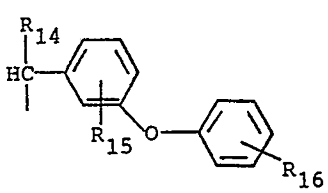

bedeutet, worin $R_{14}$ ein Wasserstoffatom, einen Methyl-, Ethinyl- oder Cyanorest bedeutet, $R_{15}$ ein Fluor-, Chlor- oder Bromatom bedeutet und $R_{16}$ ein Wasserstoff-, Fluor-, Chlor- oder Bromatom bedeutet, oder eine Gruppe

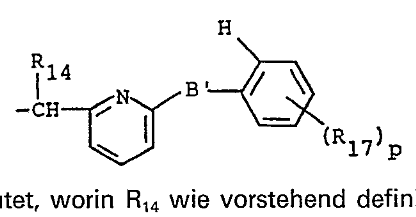

bedeutet, worin $R_{14}$ wie vorstehend definiert ist, ein jeder der Reste $R_{17}$ unabhängig eine Alkylgruppe mit 1 bis 4 Kohlenstoffatomen, eine Alkoxygruppe mit 1 bis 4 Kohlenstoffatomen, eine Alkylthiogruppe mit 1 bis 4 Kohlenstoffatomen, eine Alkylsulfonylgruppe mit 1 bis 4 Kohlenstoffatomen, eine Trifluormethylgruppe, eine 3,4-Methylendioxygruppe, Chlor, Fluor oder Brom bedeutet, p eine ganze Zahl, entsprechend 0, 1 oder 2, bedeutet und B' ein Sauerstoffatom oder ein Schwefelatom darstellt.

3. Die Verbindungen der Formel (I) gemäss Anspruch 1 oder 2, worin die Cyclopropancarbonsäure-Verknüpfungskomponente 1 R-cis- oder 1 R-trans-Struktur aufweist.

4. Die Verbindungen der Formel (I) gemäss Anspruch 1 oder 2, worin A die α-Cyano-3-phenoxybenzylgruppe in S-, R- oder RS-Form, die α-Cyano-3-phenoxy-4-fluorbenzylgruppe in S-, R- oder RS-Form oder die Cyano-(6-phenoxy-2-pyridyl)-methylgruppe in S-, R- oder RS-Form bedeutet.

5. Die Verbindungen der Formel (I) gemäss einem der Ansprüche 1 bis 4, worin X ein Fluoratom bedeutet.

6. Die Verbindungen der Formel (I) gemäss einem der Ansprüche 1 bis 4, worin X ein Bromatom bedeutet.

7. Die Verbindungen der Formel (I) gemäss einem der Ansprüche 1 bis 4, worin X ein Chloratom bedeutet.

8. Eine der Verbindungen der Formel (I) mit den folgenden Bezeichnungen:

– (S)-Cyano-(3-phenoxyphenyl)-methyl-1 R, cis-2,2-dimethyl-3-[(E)-2-fluor-3-oxo-3-isopropylthiopropenyl]-cyclopropancarboxylat;

– (S)-Cyano-(3-phenoxyphenyl)-methyl-1 R, cis-2,2-dimethyl-3-[(E)-2-fluor-3-oxo-3-tert.-butylthiopropenyl]-cyclopropancarboxylat;

– (S)-Cyano-(3-phenoxyphenyl)-methyl-1 R, cis-2,2-dimethyl-3-[(E)-2-fluor-3-oxo-3-ethylhiopropenyl]-cyclopropancarboxylat;

– (S)-Cyano-(3-phenoxyphenyl)-methyl-1 R, cis-2,2-dimethyl-3-[(E)-2-fluor-3-oxo-3-methylthiopropenyl]-cyclopropancarboxylat;

– (S)-Cyano-(3-phenoxy-4-fluorphenyl)-methyl-1 R,cis-2,2-dimethyl-3-[(E)-2-fluor-3-oxo-3-isopropylthiopropenyl]-cyclopropancarboxylat;

– (RS)-Cyano-(6-phenoxy-2-pyridyl)-methyl-1 R, cis-2,2-dimethyl-3-[(E)-2-fluor-3-oxo-3-isopropylthiopropenyl]-cyclopropancarboxylat.

9. Verfahren zur Herstellung der Verbindungen der Formel (I) gemäss einem der Ansprüche 1 bis 8, dadurch gekennzeichnet, dass man eine Säure der Formel (II)

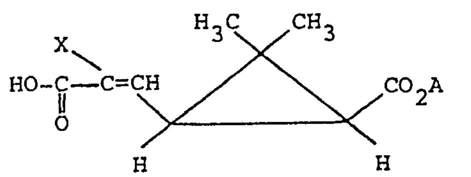 (II)

worin X und A die in Anspruch 1 angegebene Bedeutung besitzen, in dem Medium eines organischen Lösungsmittels in Gegenwart von Dicyclohexylcarbodiimid mit einem Mercaptan der Formel (III)

$$HS-R \quad (III)$$

worin R die in Anspruch 1 angegebene Bedeutung besitzt, umsetzt.

10. Verfahren gemäss Anspruch 9, dadurch gekennzeichnet, dass das organische Lösungsmittel unter Methylenchlorid, Benzol und Tetrahydrofuran ausgewählt wird.

11. Verfahren gemäss Anspruch 9 oder 10, dadurch gekennzeichnet, dass man die Umsetzung in Gegenwart von Dimethylaminopyridin durchführt.

12. Verbindungen der Formel (I) gemäss einem der Ansprüche 1 bis 8 für die Verwendung bei der Bekämpfung von Pflanzenparasiten, Parasiten von Räumlichkeiten und Parasiten warmblütiger Tiere.

13. Zusammensetzungen für die Bekämpfung von Pflanzenparasiten, Parasiten von Räumlichkeiten und Parasiten warmblütiger Tiere, dadurch gekennzeichnet, dass sie als Wirkstoff zumindest eines der Produkte gemäss einem der Ansprüche 1 bis 8 enthalten.

14. Insektizide Zusammensetzungen, enthaltend als Wirkstoff zumindest eines der Produkte gemäss einem der Ansprüche 1 bis 7.

15. Insektizide Zusammensetzungen, enthaltend als Wirkstoff zumindest ein Produkt gemäss Anspruch 8.

16. Akarizide Zusammensetzungen, enthaltend als Wirkstoff zumindest eines der Produkte gemäss einem der Ansprüche 1 bis 8.

17. Nematizide Zusammensetzungen, enthaltend als Wirkstoff zumindest eines der Produkte gemäss einem der Ansprüche 1 bis 8.

18. Akarizide Zusammensetzungen für die Verwendung bei der Bekämpfung von Parasiten warmblütiger Tiere, dadurch gekennzeichnet, dass sie als Wirkstoff zumindest ein Produkt gemäss einem der Ansprüche 1 bis 8 enthalten.

19. Zusammensetzungen für die tierische Ernährung, enthaltend als Wirkstoff zumindest eines der Produkte gemäss einem der Ansprüche 1 bis 8.

20. Mit insektizider, akarizider oder nematizider Aktivität ausgestattete Assoziationen, dadurch gekennzeichnet, dass sie als Wirkstoff einesteils zumindest eine der Verbindungen der allgemeinen Formel (I) gemäss Anspruch 1 und anderenteils zumindest einen Pyrethrinoidester enthalten, ausgewählt unter den Estern der Allethrolone, des 3,4,5,6-Tetrahydrophthalimidomethylalkohols, des 5-Benzyl-3-furylmethylalkohols, des 3-Phenoxybenzylalkohols und der α-Cyano-3-phenoxybenzylalkohole der Chrysanthemumsäuren, unter den Estern des 5-Benzyl-3-furylmethylalkohols der 2,2-Dimethyl-3-(2-oxo-3-tetrahydrothiophenylidenmethyl)-cyclopropan-1-carbonsäuren, unter den Estern des 3-Phenoxybenzylalkohols und der α-Cyano-3-phenoxybenzylalkohole der 2,2-Dimethyl-3-(2,2-dichlorvinyl)-cyclopropan-1-carbonsäuren, unter den Estern der α-Cyano-3-phenoxybenzylalkohole der 2,2-Dimethyl-3-(2,2-dibromvinyl)-cyclopropan-1-carbonsäuren, unter den Estern des 3-Phenoxybenzylalkohols der 2-p-Chlorphenyl-2-isopropylessigsäuren, unter den Estern der Allethrolone, des 3,4,5,6-Tetrahydrophthalimidomethylalkohols, des 5-Benzyl-3-furylmethylalkohols, des 3-Phenoxybenzylalkohols und der α-Cyano-3-phenoxybenzylalkohole der 2,2-Dimethyl-3-(1,2,2,2-tetrahaloethyl)-cyclopropan-1-carbonsäuren, worin „Halo" ein Fluor-, Chlor- oder Bromatom bedeutet, wobei die Verbindungen der Formel (I) in sämtlichen ihrer möglichen stereoisomeren Formen vorliegen können, ebenso wie die Säure- und Alkoholverknüpfungskomponenten der vorstehenden Pyrethrinoidester.

## Claims

1. In all their possible isomeric forms, or in all the forms of possible isomeric mixtures, the compounds with the formula I

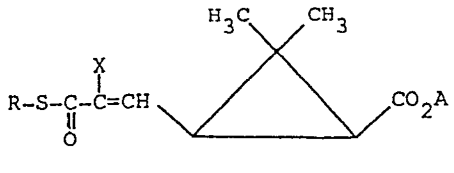

(I)

in which R represents an alkyl radical linear or branched, saturated or unsaturated, containing from 1 to 18 carbon atoms, possibly substituted by one or more identical or different functional groups, or R represents a cycloaliphatic radical containing from 3 to 7 carbon atoms possibly substituted by one or more identical or different functional groups, or R represents an aryl group, containing from 6 to 14 carbon atoms possibly substituted by one or more identical or different functional groups, or R represents a heterocyclic radical possibly substituted by one or more identical or different functional groups, X represents a fluorine, chlorine or bromine atom and A represents the residue of an alcohol used in the synthesis of pyrethrinoids and in which the ethylene double bond at position 1' of the lateral chain at position 3 of the cyclopropane cycle has the geometry Z or E.

2. Compounds with the formula I as defined in claim 1 in which A represents

– either an alkyl radical containing from 1 to 18 carbon atoms,

– or a benzyl radical possibly substituted on the aromatic apices by one or more radicals chosen from the group composed of the alkyl radicals including from 1 to 4 carbon atoms, the alkenyl radicals including from 2 to 6 carbon atoms, the alkenyloxy radicals including from 2 to 6 carbon atoms, the alkadienyl radicals including from 4 to 8 carbon atoms, the methylene dioxy radical and the halogen atoms,

– or a group

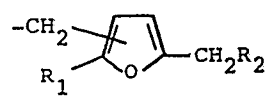

in which the substituent $R_1$ represents a hydrogen atom or a methyl radical and the substituent $R_2$ a monocyclic aryl or a group $-C{\equiv}CH$ and in particular a group 5-benzyl-3-furyl methyl,

– or a group

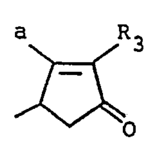

in which a represents a hydrogen atom or a methyl radical and $R_3$ represents an aliphatic organic radical including from 2 to 6 carbon atoms and one or more carbon-carbon unsaturations and in particular one of the radicals $-CH_2-CH=CH_2$, $-CH_2-CH=CH-CH_3$, $-CH_2-CH=CH-CH=CH_2$ or $-CH_2-CH=CH-CH_2-CH_3$,

— or a group

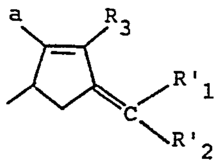

in which a represents a hydrogen atom or a methyl radical, $R_3$ retains the same significance as previously, $R'_1$ and $R'_2$, being identical or different, represent a hydrogen atom, a halogen atom, an alkyl radical containing from 1 to 6 carbon atoms, an aryl radical including from 6 to 10 carbon atoms, an alkyloxy carbonyl group including from 2 to 5 carbon atoms, or a cyano group,

— or a group

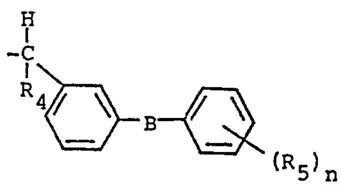

in which B represents an oxygen or sulphur atom or a group

$$-\overset{O}{\overset{\|}{C}}- \text{ or } -CH_2-,$$

$R_4$ represents a hydrogen atom, a $-C{\equiv}N$ radical, a methyl radical, a $-CONH_2$ radical, a $-CSNH_2$ radical or a $-C{\equiv}CH$ radical, $R_5$ represents a halogen atom or a methyl radical and n represents a number 0, 1 or 2, and in particular the group 3-phenoxybenzyl, α-cyano-3-phenoxybenzyl, α-ethynyl-3-phenoxybenzyl, 3-benzoyl benzyl, 1-(3-phenoxyphenyl)-ethyl or α-thioamido-3-phenoxybenzyl,

— or a group

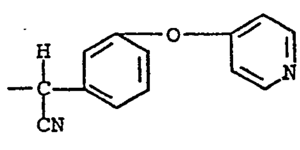

— or a group

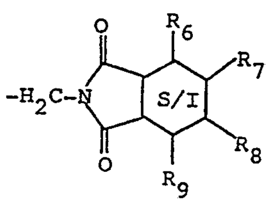

in which the substituents $R_6$, $R_7$, $R_8$ and $R_9$ represent a hydrogen atom, a chlorine atom or a methyl radical and in which S/I symbolises an aromatic ring or a similar dihydro, tetrahydro or hexahydro ring.

— or a methylene (succinimido or maleimido) group,

— or a group

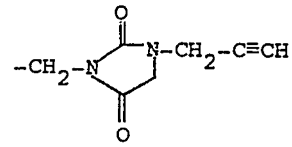

— or a group

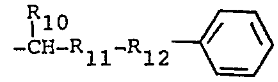

in which $R_{10}$ represents a hydrogen atom or a CN radical, $R_{12}$ represents a $-CH_2-$ radical or an oxygen atom, $R_{11}$ represents a thiazolyl or thiadiazolyl radical of which the bond with

$$-\underset{R_{10}}{\underset{|}{CH}}-$$

may be at any one of the available positions, $R_{12}$ being linked to $R_{11}$ by the carbon atom between the sulphur atom and a nitrogen atom,

— or a group

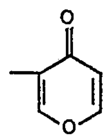

— or a group

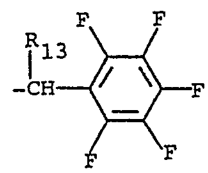

in which $R_{13}$ represents a hydrogen atom or a CN radical,

— or a group

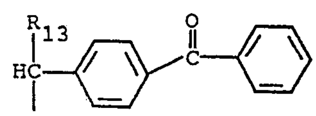

in which $R_{13}$ is defined as above,

— or a group

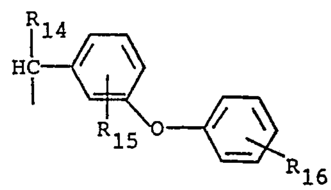

in which $R_{14}$ represents a hydrogen atom, a methyl, ethynyl or cyano radical, $R_{15}$ represents a fluorine, chlorine or bromine atom and $R_{16}$ represents a hydrogen, fluorine, chlorine or bromine atom,

— or a group

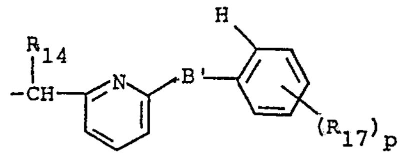

in which $R_{14}$ is defined as above, each of the $R_{17}$'s represents independently an alkyl group containing from 1 to 4 carbon atoms, an alkoxy group containing from 1 to 4 carbon atoms, an alkylthio group containing from 1 to 4 carbon atoms, an alkyl sulphonyl group containing from 1 to 4 carbon atoms, a trifluoromethyl, 3,4-methylene dioxy, chloro, fluoro or bromo group, p represents a number 0, 1 or 2 and B' represents an oxygen atom or a sulphur atom.

3. Compounds with the formula (I) as defined in claim 1 or 2, for which the cyclopropane carboxyl acid copula is of 1 R cis or 1 R trans structure.

4. Compounds with the formula (I) as defined in claim 1 or 2, for which A represents the α-cyano-3-phenoxybenzyl group in S, R or RS form, the α-cyano-3-phenoxy-4-fluorobenzyl group in S, R or RS form, the cyano(6-phenoxy-2-pyridyl) methyl group in S, R or RS form.

5. Compounds with the formula (I) as defined in any of the claims 1 to 4, for which X represents a fluorine atom.

6. Compounds with the formula (I) as defined in any one of the claims 1 to 4, for which X represents a bromine atom.

7. Compounds with the formula (I) as defined in any one of the claims 1 to 4, for which X represents a chlorine atom.

8. Any one of the compounds answering to the formula (I), the names of which follow:

— 1 R, cis 2,2-dimethyl-3-[(E) 2-fluoro-3-oxo-3-isopropylthiopropenyl]cyclopropane carboxylate of (S) cyano (3-phenoxyphenyl)methyl;

— 1 R, cis 2,2-dimethyl-3[(E) 2-fluoro-3-oxo-3-tert-butylthiopropenyl]cyclopropane carboxylate of (S) cyano (3-phenoxyphenyl)methyl;

— 1 R, cis 2,2-dimethyl-3-[(E) 2-fluoro-3-oxo-3-ethylthiopropenyl]cyclopropane carboxylate of (S) cyano (3-phenoxyphenyl)methyl;

— 1 R, cis 2,2-dimethyl-3-[(E) 2-fluoro-3-oxo-3-methylthiopropenyl]cyclopropane carboxylate of (S) cyano (3-phenoxyphenyl)methyl;

— 1 R, cis 2,2-dimethyl-3-[(E) 2-fluoro-3-oxo-3-isopropylthiopropenyl]cyclopropane carboxylate of (S) cyano (3-phenoxy-4-fluorophenyl)-methyl;

— 1 R, cis 2,2-dimethyl-3-[(E) 2-fluoro-3-oxo-3-isopropylthiopropenyl]cyclopropane carboxylate of (RS) cyano (6-phenoxy-2-pyridyl)methyl.

9. Preparation process of compounds with the formula (I) as defined in any one of the claims 1 to 8, characterized in that an acid with the formula (II)

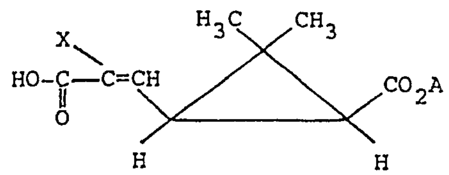 (II)

in which X and A retain the significances of claim 1, is made to react in an organic solvent, in the presence of dicyclohexyl carbodiimide, with a mercaptan with the formula (III)

$$HS-R \qquad (III)$$

in which R retains the significances of claim 1.

10. Preparation process according to claim 9, characterized in that the organic solvent is chosen from the group constituted by methylene chloride, benzene, tetrahydrofuran.

11. Preparation process according to one of the claims 9 or 10, characterized in that the reaction is carried out in the presence of dimethylamino pyridine.

12. Compounds with the formula (I), as defined in any one of the claims 1 to 8 for their use in combatting parasites of vegetation, parasites of premises and parasites of warm-blooded animals.

13. Compositions intended to combat parasites of vegetation, parasites of premises and parasites of warm-blooded animals, characterized in that they contain as active principle at least one of the products defined in any one of the claims 1 to 8.

14. Insecticide compositions containing as active principle at least one of the products defined in any one of the claims 1 to 7.

15. Insecticide compositions containing as active principle at least one product defined in claim 8.

16. Acaricide compositions containing as active principle at least one of the products defined in any one of the claims 1 to 8.

17. Nematocide compositions containing as active principle at least one of the products defined in any one of the claims 1 to 8.

18. Acaricide compositions used to combat parasites of warm-blooded animals, characterized in that they contain as active principle at least one product defined in any one of the claims 1 to 8.

19. Compositions intended for animal foodstuffs containing as active principle at least one of the products defined in any one of the claims 1 to 8.

20. Combinations endowed with insecticide, acaricide or nematocide activity, characterized in that they contain as active material, on the one hand at least one of the compounds with the general formula (I) as defined in claim 1, and on the other hand, one at least of the pyrethrinoid esters chosen from the group constituted by the esters of allethrolones, of 3,4,5,6-tetrahydrophthalimidomethyl alcohol, of 5-benzyl-3-furyl methyl alcohol, of 3-phenoxybenzyl alcohol and of α-cyano-3-phenoxybenzyl alcohols with chrysanthemic acids, by the esters of 5-benzyl-3-furyl methyl alcohol with 2,2-dimethyl-3-(2-oxo-3-tetrahydrothiophenylidenemethyl)cyclopropane-1-carboxylic acids, by the esters of 3-phenoxybenzyl alcohol and of α-cyano-3-phenoxybenzyl alcohols with 2,2-dimethyl-3-(2,2-dichlorovinyl)cyclopropane-1-carboxylic acids, by the esters of α-cyano-3-phenoxybenzyl alcohols with 2,2-dimethyl-3-(2,2-dibromovinyl)cyclopropane-1-carboxylic acids, by the esters of 3-phenoxybenzyl alcohol with 2-parachlorophenyl-2-isopropyl acetic acids, by the esters of allethrolones, of 3,4,5,6-tetrahydrophthalimidomethyl alcohol, of 5-benzyl-3-furyl methyl alcohol, of 3-phenoxybenzyl alcohol and of α-cyano-3-phenoxybenzyl alcohols with 2,2-dimethyl-3-(1,2,2,2-tetrahaloethyl)cyclopropane-1-carboxylic acids, in which "halo" represents a fluorine, chlorine or bromine atom, it being understood that the compounds (I) can exist in all their possible stereoisomeric forms, as can also the acid and alcohol copulas of the above pyrethrinoid esters.